# EUROPEAN PATENT APPLICATION

(11) **EP 0 678 741 A1**
(43) Date of publication of application: **25.10.1995**
(21) Application number: 95200937.1
(22) Date of filing: 13.04.1995
(51) Int. Cl.: G01N 27/447

(54) **Automatic apparatus for electrophoretic, electrochemical and chemical analysis**

(30) Priority: 18.04.1994 IT MI940739
(71) Applicant: HELENA LABORATORIES ITALIA S.p.A., I-20090 Assago (Milano) (IT)
(72) Inventor: Campanile, Giuseppe, I-00171 Roma (IT)
(74) Representative: Appoloni, Romano

(57) **Abstract**

An automatic apparatus for electrophoretic, electrochemical or chemical analysis of samples positioned on support strips to be subjected to a series of stages comprising withdrawal and deposition of samples, treatment with liquids, drying and final reading of said treated strips, comprising a a framework (12), a rotary support element (14) with which an actuator means (17) is associated for its rotation and on which there can be positioned in a freely removable manner a support (19) for at least one strip (20) arranged to receive samples for analysis, a series of stations (34, 40, 50-52, 54) for effecting treatment stages, which stations can be moved by relative actuator means towards or away from the rotary support element (14) in correspondence with its positions of rotation, in order to implement one of the stages on at least one strip (20).

## Description

This invention relates to an automatic apparatus for electrophoretic, electrochemical and chemical analysis.

For example, current apparatus for electrophoretic analysis use supports for receiving the so-called serum obtained by centrifuging blood taken from the patient. These supports, known as cards or strips and constructed of agar, cellulose acetate etc., receive during analysis for example the centrifuge-produced serum from suitable depositing devices. At this point the strip carrying a number of small deposited quantities of serum is positioned between two solutions, one of positive potential and one of negative potential, and a voltage is applied across the ends for a predetermined time, for example some minutes. By this means the proteins present within the various serum samples move along the strip to occupy different positions on it.

This stage is known as "migration" and prepares the strip for the subsequent stages of the electrophoretic test. These subsequent stages are usually effected by successive immersion in a vessel in which the treatment solution is replaced as required, or alternatively in a series of different vessels filled with the necessary treatment solutions.

In this respect for example a "coloration" stage is effected in which a colouring liquid binds to the proteins and to the strip, followed by a "decoloration" stage with a second liquid which highlights the proteins, which remain coloured, while removing colour from the remaining part of the strip. A further stage with a further solution, known as "diaphanization", makes the strip transparent except in the regions where the proteins are present.

A drying stage precedes the reading of the strip, with a computer displaying the various protein fractions which have remained coloured.

This complete analysis, which until a few years ago was effected manually with considerable problems, is now carried out with nearly automatic apparatus. In this respect, currently available apparatus use mechanical and electronic units to advance the strips, subject them to the necessary immersions and drying, and finally read the results.

For example some apparatus have a system for the continuous-path conveying of one strip after another through the various vessels and stages, the passageways for the strips being such that if even one strip does not enter them in a reliable manner they halt the apparatus with a loss of production and considerable damage until reset. Moreover because a complete analysis takes about one hour, if a fault occurs there is a considerable production and economic loss.

Other known apparatus insert the strips conveyed by pulleys in support frames using very complex and costly systems, which inter alia do not ensure a high level of continuous operation.

In addition the strips are treated individually, with the next strip not beginning its treatment until the end of each analysis cycle. The result is a considerable slowness of operation.

An object of the present invention is to provide a simplified apparatus which overcomes the aforesaid drawbacks by quickening the treatment of the supports and reducing treatment time.

A further object is to examine a number of strips simultaneously without necessarily having to increase investment by purchasing more than one apparatus.

These objects are attained according to the present invention by an automatic apparatus for electrophoretic, electrochemical and chemical analysis of samples positioned on support strips to be subjected to a series of stages comprising withdrawal and deposition of samples, treatment with liquids, drying and final reading of said treated strips, comprising a framework, a rotary support element with which an actuator means is associated for its rotation and on which there can be positioned in a freely removable manner a support for at least one strip arranged to receive samples for analysis, a series of stations for effecting treatment stages, at least one between said rotary support element and said series of stations being moved by relative actuator means towards and away in order to implement one of the stages on at least one strip.

Characteristics and advantages of an automatic apparatus for electrophoretic analysis according to the invention will be more apparent from the description thereof given hereinafter by way of non-limiting example with reference to the accompanying schematic drawings, in which:
Figure 1 is a partly sectional schematic elevation of a first side of an automatic apparatus for electrophoretic analysis according to the invention;
Figure 2 is a partly sectional schematic elevation of a second side of an automatic apparatus for electrophoretic analysis according to the invention;
Figure 3 is an enlarged plan view from above of a strip support element applicable to a rotary support element of the apparatus;
Figure 4 is an enlarged elevation of the support element positioned in correspondence with a portion of a migration chamber, and
Figure 5 is a schematic elevation of a second embodiment of the apparatus.

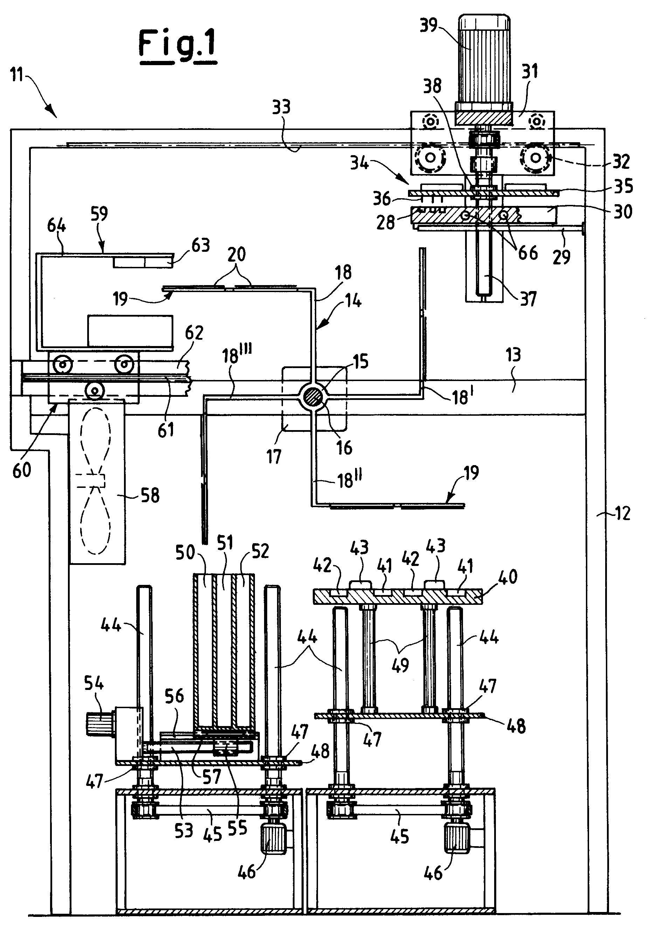

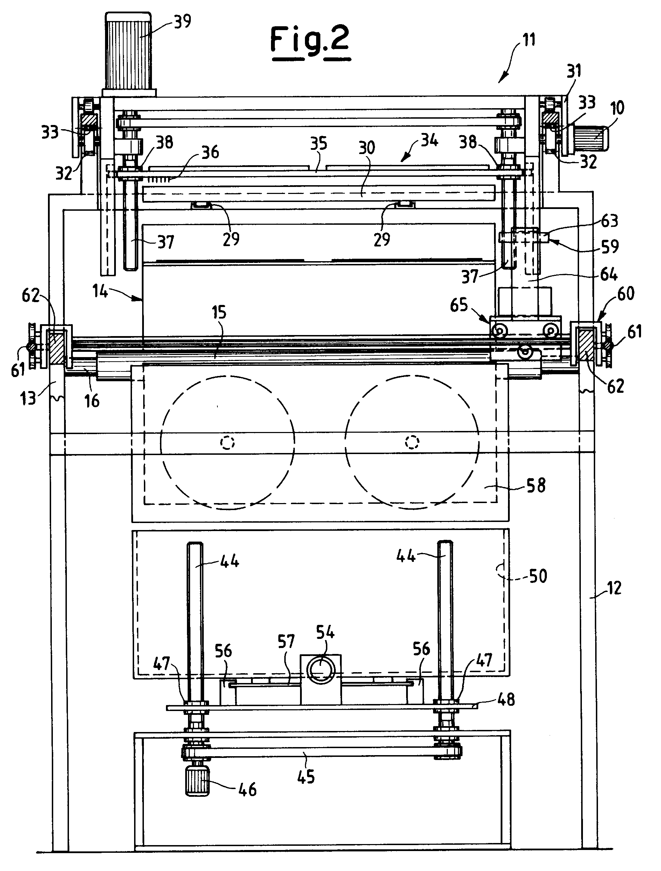

Figures 1 and 2 show schematically one embodiment, indicated overall by 11, of an automatic apparatus for electrophoretic analysis, in particular for blood protein analysis.

The apparatus comprises a framework 12 carrying a series of stations and devices for implementing the electrophoretic analysis, the figures not showing the containers for the various treatment liquids, the liquid handling elements or the processor for correlating the movements of the various motor and non-motor devices on the basis of the procedure chosen for the particular treatment.

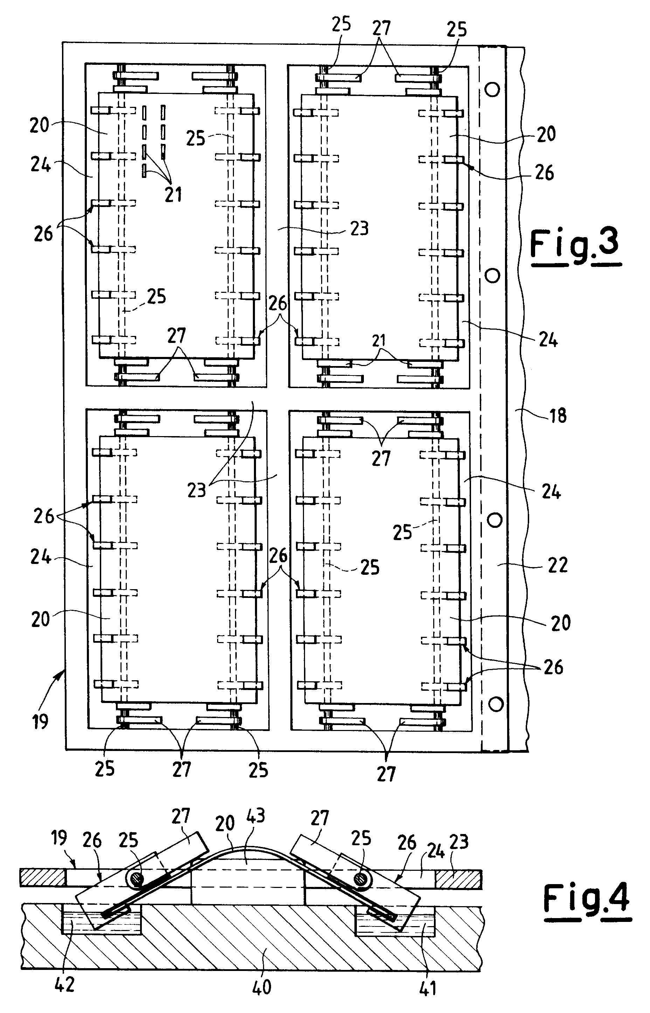

The framework 12 consists of a parallelepiped body, in a central portion of which there is positioned on two cross-members 13 a rotary support element 14. In the illustrated example the rotary support element 14 consists of a central core 15 mounted on a shaft 16 and driven at 17, and from which there extend four support arms 18, 18', 18'' and 18'''. Each of said support arms 18-18''' can house in a freely removable manner a frame 19, such as that shown in Figure 3, carrying a series of strips 20 on which sera or samples to be analyzed, indicated schematically as lines 21, are deposited. The strips 20, otherwise known as cards or sample supports, are usually constructed of a material such as agar, cellulose acetate or the like, particularly suitable for analysis by an electrophoretic method.

The non-limiting example shows that the frame 19 can be in the form of an outer border 22 defining four windows 24 by means of two mutually perpendicular axial cross-members 23. In each of the windows 24 there are located two rotatable shafts 25 carrying a series of spaced-apart fixing teeth 26 arranged to receive one or more strips 20. At the opposite ends of each shaft 25, in a region close to the border 22, each shaft rigidly carries a radial arm extension 27. The extension 27 extending from a first shaft faces the similar extension extending from the second strip support shaft. As will be seen hereinafter, the extensions 27 rotate the shafts 25 to provide mobility to the strip 20 supported by the fixing teeth. The extensions are used in cooperation with further elements to flex the strip and enable its end edges to be immersed in the migration liquid.

The drive 17 enables the support element 14 to be rotated through 90° steps to bring the strips 20, in accordance with a predetermined sequence defined by a processor, into positions corresponding with selected stations located on the framework 12.

According to the invention the stations locatable in suitable positions on the framework 12 comprise elements and devices which, depending on the specific requirements of the analysis or of that stage thereof to be conducted, can be moved into positions corresponding with the strips located on the rotary support element, for example on one of its arms 18-18'''.

The example shows that a first station can consist of a support element or bracket 29 fixed to the framework 12 and on which a vessel 30 provided with a lid and channels 66 for circulating the moistening water can be moved in the manner of a drawer. The vessel 30 contains a plurality of serum samples which after blood centrifuging are for example located in a series of wells 28 partially shown.

Above the vessel 30 on a carriage 31, movable for example by means of a relative motor 10 connected to a pinion 32 running on a rack 33 fixed to the framework 12, there is located a serum withdrawal and deposition unit indicated overall by 34. The unit 34 consists for example of a plate 35, below which there are positioned withdrawal elements 36 known as depositors, which are able to penetrate into the wells 28 of the underlying vessel 30 to withdraw small quantities of serum. This lowering and raising movement is determined for example by a pair of worms 37 controlled by an intermediate transmission operated by a motor 39.

The worms 37 act on a respective pair of nut screws 38 rigid with the plate 35.

The carriage 31 enables the serum withdrawal and deposition unit 34 to be moved horizontally along the framework to position it above and in correspondence with the strips 20 located on a first arm 18 of the rotary support element 14. When in this position the serum samples are deposited on the underlying strips 20, for example along a number of parallel rows and only on those strips to be treated.

Having completed deposition the carriage returns to the initial position shown in Figure 1. By operating the motor 17 the support element 14 is then able to rotate and move into a position corresponding with a further station in which a migration chamber is located. This chamber comprises a vessel 40 in which several pairs of channels 41, 42 containing migration liquid are provided.

The channels 41, 42 are connected to a positive potential and to a negative potential respectively, and are arranged to receive terminal lateral edges of the strips 20.

Above the vessel 40 there extend cam elements 43 or pressers arranged to make contact with the radial arm extensions 27 and hence to rotate the shafts 25. As shown in Figure 4, the interaction between the cam elements 43 and each pair of facing arm extensions 27 of two shafts 25 supporting the strip 20 causes the strip to flex as an arch with its two edges symmetrical. This flexure results in the immersion of its terminal edges to an optimum extent into those channels 41 and 42 containing the buffer solution which lie to the two sides of the strip and have their potential of different sign. Electrophoretic migration then takes place. According to the present invention, as the vessel 40 is formed with a number of channels suitable for receiving the end edges of four strips, migration is achieved simultaneously on four strips.

The migration vessel 40 is movable vertically upwards and downwards, for example by worms or threaded columns 44, suitably driven via a base transmission 45 and a relative motor 46 also connected to the central processor, not shown. The threaded screws 44 engage nut screws 47 in an intermediate plate 48 which supports the migration vessel 40 via relative uprights 49.

When this treatment stage is complete the support element 14, and in particular that arm 18 carrying the strips 20 which have terminated the migration stage, is rotated by the motor 17 to a further station in which a plurality of vertical vessels, for example three in number indicated by 50, 51 and 52, are provided.

The vessels 50-52, which are also located on vertical movement means 44-46, with a relative plate 48 and nut screws 49 such as those located below the vessel 40, are also provided with means for their horizontal movement. These horizontal movement means comprise for example a worm 53 driven by a relative geared motor 54 and engaging a nut screw 55 projecting below the vessel unit 50-52. Suitable grooved guides 56 fixed to the plate 48 receive a complementary guide plate 57 fixed to the underside of the vessel unit 50-52, to determine correct movement of the vessel unit 50-52. This horizontal movement makes it possible to locate one of the vessels 50-52 in alignment with the arm 18 carrying the strips 20 already subjected to migration. The raising and subsequent lowering of the vessels plus their horizontal movement enable the already stated coloration, decoloration and diaphanization operations to be carried out. A thermal or non-thermal fan unit located on the framework 12 in a vertical position parallel to said arm 18 aligned with and above the vessels 50-52 dries the strips 20 when required, for example after a determined immersion.

It will be noted that, for example, by rotating the support element 14 until the arm 18 carrying the strips 20 which have undergone the aforesaid treatment stages returns to its initial starting position the samples located on the various strips can be read. For this purpose there can be provided on the framework 12 a reader unit indicated overall by 59 and connected to the central processor. The reader unit 59 comprises for example a first carriage 60 supporting the entire reader unit 59 and driven to slide via its wheels on guides 61 coupled to extensions 62 of the cross-members 13 by relative actuator elements, not shown, such as motorized cables. This first carriage 60 carries a reading head 63 over the strips 20.

The reading head 63, suitably located on a C-shaped support 64, is mounted on a second carriage 65 slidable relative to the first carriage 60. This second carriage 65 moves in a direction perpendicular to the preceding longitudinally to the strips to detect the coloured proteins and provide relative plots which can be subsequently analyzed. On the reading head there is mounted a device controlled by the processor and formed for example from an illuminator consisting of an opal or milk-white glass sheet and an illuminating lamp to allow visual qualitative analysis of the sample.

It is apparent that with an electrophoretic analysis apparatus formed in accordance with the invention further stations can be provided, locatable in a suitable position on the framework 12.

Depending on the specific requirements of the analysis or investigation to be conducted, these stations will comprise elements for analyzing or acting on the strips and movable into positions corresponding with the strips located on parts of the rotary support element, namely on one of its arms in the given example.

By means of the rotary support element 14 the strips 20 can be brought into any one of a numerous series of positions within an arc of 360° to effect the desired treatment stage rapidly without difficulty.

The rotary support element 14 can carry from one to a large number of strips, which can hence be treated in great quantity so saving time and reducing the related costs. This type of handling on a rotary support avoids possible trouble connected with jamming of the individual strip along the path of treatment as in the case of automatic apparatus known up to the present time.

The provision of frames for supporting several strips also reduces down-time because the frames can be prepared during operation and be located on the rotary support element by simple and fast-acting fixing elements such as screws or the like.

The presence of several strips on one support frame enables strips to be processed for different analyses simultaneously, achieving more rapid complete results.

Because of the structure of the support frame the strips can be of any material normally used, such as agar, cellulose acetate, etc.

The active positioning of the strips on the frame ensures their correct curving and that their edges become immersed in the treatment baths, such as the migration bath. Moreover the fact of being positioned on said frame on a rotary support element ensures that whatever the extent of rotation they become positioned correctly at any treatment station for electrophoretic, electrochemical or chemical analysis.

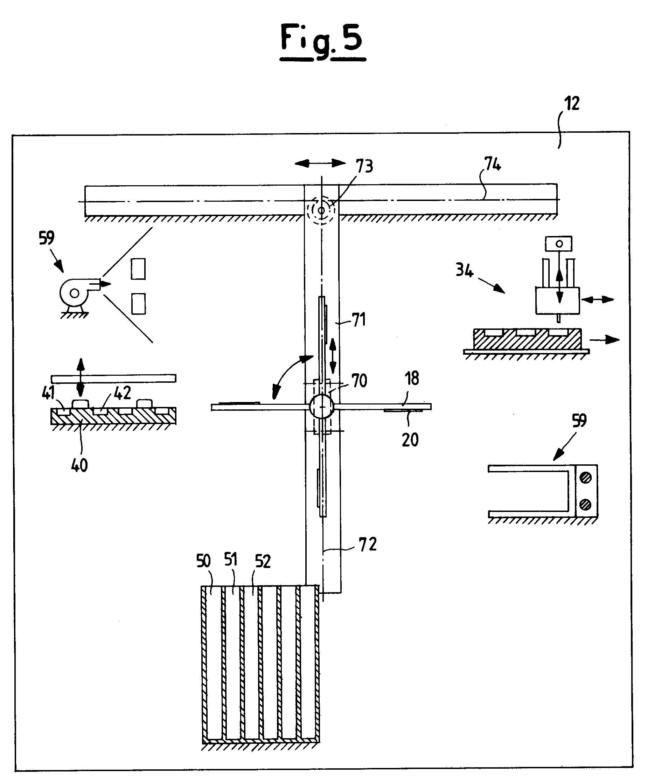

Figure 5 shows a second configuration of an apparatus whereby same reference numerals are given to equal or corresponding elements.

It must be noted that all the various stations on the framework 12 are rigidly fixed thereto, while the rotary support element 14 can be moved on the framework in correspondence with the various stations. For this purpose, the rotary support element 14 is located on a carriage 70 movable along a first rod 71, for instance on a rack indicated by 72. The first rod can be moved by means of a motor driven gear 73 along a rack 74 rigidly connected to the framework 12. The first disposition causes the rotary support element to move vertically, while the second one causes it to move horizontally.

In this way the various strips 20 placed on the arms 18,18',18'' and 18''' can be brought in alignment with the serum withdrawal and deposition units 34, the migration chamber 40-42, the various vessels 50-52 for coloration, decoloration, etc., the fan unit 58 as well as in alignment with the reader unit 59 in order to carry out the analysis stages.

This apparatus as well as the previously mentioned one solve the same drawbacks and obtain the same advantages.

## Claims

1. An automatic apparatus for electrophoretic, electrochemical or chemical analysis of samples positioned on support strips to be subjected to a series of stages comprising withdrawal and deposition of samples, treatment with liquids, drying and final reading of said treated strips, comprising a framework (12), a rotary support element (14) with which an actuator means (17) is associated for its rotation and on which there can be positioned in a freely removable manner a support (19) for at least one strip (20) arranged to receive samples for analysis, a series of stations (34,40,50-52, 54) for effecting treatment stages, whereby at least one element chosen between said rotary support element and said series of stations can be moved by relative actuator means toward or away in order to implement one of the stages on at least one strip (20).

2. An automatic apparatus for electrophoretic analysis as claimed in claim 1, characterised in that said rotary support element (14) consists of a central core (15) from which there extend support arms (18, 18', 18'', 18''') on which said supports (19) for said strips (20) are positioned.

3. An automatic apparatus for electrophoretic analysis as claimed in claim 1, characterised in that said rotary support element (14) is bound to said framework.

4. An automatic apparatus for electrophoretic analysis as claimed in claim 3, characterised by comprising a migration station consisting of a vessel (40) provided with at least one pair of channels (41, 42) containing buffer solutions and connected to a negative potential and a positive potential respectively, said vessel (40) being arranged on actuator means (44-47) for its raising towards and lowering away from said support (19) for at least one strip (20) positioned on said rotary support element (14).

5. An automatic apparatus for electrophoretic analysis as claimed in claim 3, characterised by comprising a station consisting of a plurality of side-by-side vertical vessels (50-52) arranged on actuator means (44-47) for their raising towards and lowering away from said rotary support element (14), and actuator means (53-56) for their horizontal movement in order to selectively align one of said vessels (50-52) with said support (19) for at least one strip (20) positioned on said rotary support element (14).

6. An automatic apparatus for electrophoretic analysis as claimed in claim 3, characterised by comprising a withdrawal and deposition station consisting of a plate (35) provided with withdrawal elements (36), and of an underlying horizontal vessel (30) provided with a moistening system (66) and containing small quantities of serum in wells (28), there being provided actuator means (37-39) for raising said withdrawal elements towards and lowering them away from said vessel (30), and actuator means (31-33) for their horizontal movement in order to selectively align said deposition means with said support 19 for at least one strip (20) positioned on said rotary support element (14).

7. An automatic apparatus for electrophoretic analysis as claimed in claim 3, characterised by comprising, for said at least one strip (20) once treated, a reading and visual inspection station comprising a reader unit (59, 63) provided with actuator means (60-62) for its movement towards and away from said rotary support element (14) and actuator means (65) for its movement perpendicular to said first movement in order to selectively align it with treated samples (21) present on said at least one strip (20) positioned on said rotary support element (14).

8. An automatic apparatus for electrophoretic analysis as claimed in claim 1, characterised in that said rotary support element (14) is endowed with actuator means for its movement with respect to said framework (12) which can bring it in correspondence with said series of stations.

9. An automatic apparatus for electrophoretic analysis as claimed in claim 8, characterised by comprising at least one treatment station bound to said framework chosen among a migration station (40-42), a serum withdrawal and deposition station (34), a series of vessels (50-52), a fan unit (58) as well as a reader unit (59) to carry out the analysis stages.

10. An automatic apparatus for electrophoretic analysis as claimed in claim 8, characterised by comprising as actuator means for said rotary support element (14) a carriage (70) and a first rod (71), whereby the former is movable along a first rod (71) to cause a vertical movement, and the latter is movable by means of a motor driven gear (73) along a rack (74) rigidly connected to said framework (12) to cause a horizontal movement.

11. An automatic apparatus for electrophoretic analysis as claimed in claim 1, characterised in that each of said supports (19) houses a plurality of strips (20).

12. An automatic apparatus for electrophoretic analysis as claimed in claim 1, characterised in that each of said supports (19) comprises an outer border (22) defining at least one window (24) within which there are located a pair of rotatable shafts (25) carrying a series of fixing teeth (26) arranged to receive at least one strip (20), each of said shafts (25) rigidly carrying an extension (27) which by means of an engagement element (43) causes said at least one strip (20) located within said series of fixing teeth (26) to undergo flexure and curvature.

13. An automatic apparatus for electrophoretic analysis as claimed in claim 1, characterised by further comprising a drying station comprising at least one fan (58) facing said support (19) for said at least one strip (20) positioned on said rotary support element (14).
